# EUROPEAN PATENT SPECIFICATION

(11) **EP 2 895 008 B1**
(45) Date of publication and mention of the grant of the patent: **06.04.2016**
(21) Application number: 13758820.8
(22) Date of filing: 30.08.2013
(51) Int. Cl.: A23L 5/10, A23L 27/14, A23L 13/00

(54) **METHOD OF PREPARING A COOKED SEASONED FOOD PRODUCT AND PACKAGED SEASONING PRODUCT FOR USE THEREIN**
VERFAHREN ZUR HERSTELLUNG EINES GEKOCHTEN, GEWÜRZTEN LEBENSMITTELPRODUKTS UND VERPACKTES GEWÜRZPRODUKT ZUR VERWENDUNG DAFÜR
PROCÉDÉ DE PRÉPARATION D'UN PRODUIT ALIMENTAIRE CUIT ASSAISONNÉ ET PRODUIT D'ASSAISONNEMENT EMBALLÉ DESTINÉ À ÊTRE UTILISÉ DANS CELUI-CI

(30) Priority: 14.09.2012 EP 12184450
(43) Date of publication of application: 22.07.2015
(73) Proprietor: Unilever N.V., 3013 AL Rotterdam (NL); Unilever PLC, London, Greater London EC4Y 0DY (GB)
(72) Inventor: NATH, Prasanta Kumar, 74074 Heilbronn (DE); ZAGO, Igor, 74074 Heilbronn (DE); ZITTERBART, Matthias Stefan, 74074 Heilbronn (DE)
(74) Representative: Reijns, Tiemen Geert Pieter
(86) International application number: PCT/EP2013/067978
(87) International publication number: WO 2014/040868

(56) References cited:
- WO-A1-2007/017608
- GB-A- 1 112 227
- JP-A- 2010 254 368
- US-A1- 2008 107 781
- US-A1- 2010 272 868
- DATABASE GNPD [Online] MINTEL; July 2012 (2012-07), "Dill & White Wine Seasoning Kit for Fish Roasting", XP002691401,accession no. 1834492 Database accession no. 1834492

## Description

### TECHNICAL FIELD OF THE INVENTION

The invention relates to a method of preparing a cooked seasoned food product, said method comprising:
- introducing a food product together with a seasoning composition into a cooking bag;
- introducing the cooking bag containing the food product and the seasoning composition into a pan;
- heating pan holding the cooking bag to cook the seasoned food product within the cooking bag; and
- removing the cooked seasoned food product from the cooking bag.

The invention also relates to a packaged seasoning product, especially a packaged seasoning product that comprises a seasoning component and a cooking bag that can be used to cook a seasoned food product in a pan.

### BACKGROUND OF THE INVENTION

Marination is the process of soaking food products in a seasoning composition, often an acidic liquid, before cooking. The 'marinade' can be acidic with ingredients such as vinegar, lemon juice, or wine or enzymatic (made with ingredients such as pineapple or papaya.). Along with these liquids, a marinade often contains oils, herbs, and spices to further flavour the food items. Marination is commonly used to flavour foods and to tenderise tougher cuts of meat. The process may last seconds or days. Different marinades are used in different cuisines. For example, in Indian cuisine the marinade is usually prepared with a mixture of spices.

A variety of cooking methods are commonly used to prepare marinated food products, including frying, grilling and oven cooking.

WO 2012/016768 describes a cooking aid comprising:
a) a sheet of flexible burn resistant material;
b) a composition disposed on one face of the sheet, the composition comprising a mixture of:
   - vegetable or animal oil with a melting point below 20 °C;
   - vegetable or animal fat with a melting point above 20 °C; and
   - one or more herbs, spices and flavour enhancers.

The cooking aid may be used for cooking meat or vegetables, where pieces of the meat or vegetables are placed on the cooking aid in direct contact with the composition and are cooked in a preheated pan.

DE 2 900 195 describes an insert for a frying pan that can be used for frying meat without fat. The insert consists of a disc having a diameter slightly larger than the bottom of the frying pan, and is made of paper with a silicone polymer coating.

GB-A 2 160 539 describes a coated paper having a weight per unit area of less than 50 g/m². The coated paper is obtained by coating a paper substrate with an aqueous emulsion of a linear polydimethylsilicone resin having reactive terminal OH-groups and silocone resin, and subsequently drying the substrate. The coated paper can be used as an insert for frying and baking in pans and baking tins.

GB 12 680 describes a bag made from grease proof paper suitable for use in so called paper bag cooking.

JP 2010254368 describes a paper bag for cooking which is constructed such that a food is inserted from both end openings of a tubular paper bag and is heated and cooked with both end openings closed. The inside of the paper bag has an oil-proof surface.

EP-A 0 201 140 describes a paper bag made from baking parchment for food to be heated in microwave ovens, said paper bag having at least one overlapping adhering seam and, except for the adhered seam portions, being provided internally with a non-adhesive coating of silicones.

r US 2008/010778 discloses a food container which includes a first compartment for retaining a food item, and a second compartment for retaining an accessory for the food item, such as a seasoning or a marinade or a cooking bag.

Packaged seasoning products containing a seasoning component and a bag for oven cooking are currently commercially available in several European countries, e.g. under the brand Knorr®. These commercial products typically comprise a pouch with two separate chambers, one chamber containing a dry seasoning mix and another chamber containing a folded oven bag made of a heat-resistant polymer and a clip or tie for closing the bag. Instructions provided on the pouch advise the consumer to prepare a ready-to-eat foodstuff by introducing a food product, such as meat, into the oven bag together with the seasoning, closing the bag with a clip or a tie and holding the filled bag in a preheated oven for a defined period of time.

US 2010/0272868 describes a container comprising a first and a second chamber separated by a peelable seal, wherein the second chamber contains a food component such as sauces, gravies, liquids, granules, powders or combinations thereof. The container can be used to prepare a foodstuff by opening the first chamber, placing a food base in the first chamber and closing the first chamber, opening the peelable seal so that the food component in the second chamber mixes with the food base in the first chamber. The US application mentions heating the container to further prepare the food product.

### SUMMARY OF THE INVENTION

The inventors have developed a very convenient and robust method for preparing a cooked seasoned food product. This method employs a cooking bag made of heat- and oil-resistant paper for the cooking of the seasoned (e.g. marinated) food product. The edges of the cooking bag are sealed by stitching and the inside of the paper bag is covered by one or more layers selected from an aluminium layer and a heat-stable polymer layer. In accordance with the invention the cooking of the seasoned food product is realised by introducing the cooking bag containing the seasoned food product into a pan and by heating the pan until the seasoned food product is adequately cooked.

Accordingly, the invention relates to a method of preparing a cooked seasoned food product, said method being defined in the detailed description and comprising as essential aspects:
- introducing a food product together with a seasoning composition into a cooking bag;
- introducing the cooking bag containing the food product and the seasoning composition into a pan;
- heating the pan holding the cooking bag to cook the seasoned food product within the cooking bag; and
- removing the cooked seasoned food product from the cooking bag;
wherein the cooking bag is made of heat- and oil-resistant paper, the inside of the cooking bag being coated with and/or forming a laminate with one or more layers selected from an aluminium layer and a heat-stable polymer layer, said cooking bag having an internal volume of 0.1-2 litre and comprising an opening with a maximum diameter of 5-50 cm; and wherein the edges of the cooking bag are sealed by stitching. If the food product and the seasoning composition are separately introduced in the cooking bag, the bag may be closed and the seasoning composition may be distributed evenly across the surface of the food product by, for instance, turning and/or gently shaking the bag and its contents. Alternatively, the seasoning composition may be applied onto the food product before it is introduced into the cooking bag.

Cooking of the seasoned food product is achieved by heating the cooking bag containing the seasoned food product in a pan. Since there is no need to grease the pan and since the seasoned food product is not in direct contact with the pan during the cooking, the pan does not need to be cleaned, or can easily be cleaned after the cooking. The use of the cooking bag offers the additional advantage that the seasoned food product can be cooked more quickly. The present method further enables the preparation of a cooked, seasoned product with a uniform, roasted appearance and a succulent texture.

The cooking bag of the present invention is very robust and can repeatedly be flipped and pushed around the frying pan without becoming damaged. Furthermore, the bag may be reused to cook multiple times thanks to its excellent heat-, oil- and moisture-resistance.

The stitched seals of the cooking bag are heat-, moisture- as well as fat-resistant. As a result the bag can be kept closed during cooking and steam is retained within the bag during the cooking. Steam contributes to the cooking process in that it prevents the surface of the food product to develop burns whilst at the same time accelerating the actual cooking of the (interior of) the product. Thus, the food product becomes fully cooked more rapidly than if an open cooking bag or no cooking bag is used.

The internal coating of the bag facilitates removal of the ready-to-eat food product after the cooking and contributes to the heat, moisture and fat resistance of the bag.

The invention further provides a packaged seasoning product being defined in the detailed description and comprising as essential aspects:
- a package;
- 15-100 g of a seasoning component that is contained within the package; and
- an empty cooking bag that is also contained within the package
wherein the cooking bag is made of heat- and oil-resistant paper, the inside of the cooking bag being coated with and/or forming a laminate with one or more layers selected from an aluminium layer and a heat-stable polymer layer, said cooking bag having an internal volume of 0.1-2 litre and comprising an opening with a maximum diameter of 5-50 cm; and wherein the edges of the cooking bag are sealed by stitching.

### BRIEF DESCRIPTION OF THE DRAWINGS

- Fig. 1: depicts a perspective view of the packaged seasoning product of the present invention
- Fig. 2: depicts a sectional view taken on line 1-1 of Fig. 1
- Fig. 4: depicts an unfolded, opened cooking bag containing a food product and a seasoning composition
- Fig. 5: depicts a cooking bag (not according to the present invention) containing a seasoned food product that has been closed by folding
- Fig. 6: depicts a frying pan on a stove, the frying pan holding a cooking bag (not acording to the present invention) containing a seasoned food product.

### DETAILED DESCRIPTION OF THE INVENTION

Accordingly, one aspect of the present invention relates a method of preparing a cooked seasoned food product, said method comprising:
- introducing a food product together with a seasoning composition into a cooking bag that is made of heat- and oil-resistant paper, said cooking bag having an internal volume of 0.1-2 litre and comprising an opening with a maximum diameter of 5-50 cm;
- introducing the cooking bag containing the food product and the seasoning composition into a pan;
- heating the pan holding the cooking bag to cook the seasoned food product within the cooking bag; and
- removing the cooked seasoned food product from the cooking bag
   wherein the cooking bag is made of heat- and oil-resistant paper, the inside of the cooking bag being coated with and/or forming a laminate with one or more layers selected from an aluminium layer and a heat-stable polymer layer, said cooking bag having an internal volume of 0.1-2 litre and comprising an opening with a maximum diameter of 5-50 cm; and
   wherein the cooking bag is a cooking bag (A) comprising:
   - a folded sheet comprising a front sheet and a back sheet that are operatively associated with each other by a folded edge;
   - the front sheet comprising second, third and fourth edges so disposed that the third edge is substantially parallel to the folded edge and the second and fourth edges are substantially parallel to one another;
   - the back sheet comprising first, second, third and fourth edges so disposed that the third edge is substantially parallel to the folded edge and the second and fourth edges are substantially parallel to one another, the second edge of the first sheet being operatively associated with the second edge of the second sheet by stitching, the third edge of the first sheet being operatively associated with the third edge of the second sheet by stitching;
   - an opening formed by the first and second sheets defined in part by the fourth edge of the first sheet and the fourth edge of the second sheet;
   or wherein the cooking bag is a cooking bag (B) comprising:
   - a folded sheet comprising a front sheet and a back sheet that are operatively associated with each other by a folded edge;
   - the front sheet comprising second, third and fourth edges so disposed that the third edge is substantially parallel to the folded edge and the second and fourth edges are substantially parallel to one another;
   - the back sheet comprising first, second, third and fourth edges so disposed that the third edge is substantially parallel to the folded edge and the second and fourth edges are substantially parallel to one another, the second edge of the first sheet being operatively associated with the second edge of the second sheet by stitching, the fourth edge of the first sheet being operatively associated with the fourth edge of the second sheet by stitching;
   - an opening formed by the first and second sheets defined in part by the third edge of the first sheet and the third edge of the second sheet;
   or wherein the cooking bag is a cooking bag (C) comprising:
   - a first sheet comprising first, second, third and fourth edges so disposed that the first and third edges are substantially parallel to one another, and the second and fourth edges are substantially parallel to one another;
   - a second sheet comprising first, second, third and fourth edges so disposed that the first and third edges are substantially parallel to one another, and the second and fourth edges are substantially parallel to one another, the first edge of the first sheet being operatively associated with the first edge of the second sheet by stitching, the second edge of the first sheet being operatively associated with the second edge of the second sheet by stitching, the third edge of the first sheet being operatively associated with the third edge of the second sheet by stitching;
   - an opening formed by the first and second sheets defined in part by the fourth edge of the first sheet and the fourth edge of the second sheet.

The term "seasoning composition" as used herein refers to a composition that can be added to foods to impart taste and/or smell thereto. The seasoning composition may be a powder, a paste or a liquid (including a viscous liquid). Seasoning compositions typically include at least one of herbs, spices and salt. Examples of seasonings include:
- Marinates
- Acid seasonings, e.g. vinegar, vinegar aromatized with herbs, lemon juice
- Hot seasonings, e.g. peppercorns, ground or coarsely chopped pepper, or mignonette pepper; paprika, curry, cayenne, and mixed pepper spices
- Saline seasonings, e.g. salt and spiced salt
- Saccharine seasonings, e.g. sugar or honey
- Condiments, e.g. onions, shallots, garlic, chives, and horseradish.
- Hot condiments, e.g. mustard, capers, Worcestershire, chili, Tabasco
- Fatty substances, e.g. butter, olive oil, infused oils

The term "bag" as used herein refers to a non-rigid container or tube that is made of a flexible material.

The terminology "heat- and oil-resistant paper" as used herein refers to a paper that is capable of withstanding temperatures in excess of 150°C and that is largely impermeable to oil due to a very low porosity.

The term "parchment paper" as used herein refers to a cellulose-based paper that is used in baking as a disposable non-stick surface. Modern parchment paper is made by running sheets of paper pulp through a bath of sulfuric acid or sometimes zinc chloride. This process partially dissolves or gelatinizes the paper, a process which is reversed by washing the chemicals off followed by drying. This treatment forms a sulfurized cross-linked material with high density, stability, and heat resistance, and low surface energy - thereby imparting good non-stick or release properties. The treated paper has an appearance similar to that of traditional parchment.

The term "greaseproof paper" as used herein refers to is paper that is impermeable to oil or grease and is normally used in cooking or food packaging. Normally greaseproof paper is produced by refining the paper stock and thus create a sheet with very low porosity. This sheet is supercalendered to further improve the density creating a paper called glassine. The glassine is treated with starches, alginates or CMC in a size press to fill pores or treat the paper chemically to make it fat repellent. Basis weights are usually 30-50 g/m².

The heat- and oil-resistant paper employed in the cooking bag of the present invention is preferably selected from parchment paper and greaseproof paper. The cooking bag of the present invention is most preferably made of parchment paper.

The heat- and oil-resistant paper of the cooking bag typically has a paper density of at least 10-100 g/m². More preferably, the paper density is in the range of 20-80 g/m², most preferably of 25-60 g/m².

The cooking bag may suitably be closed by folding the bag at the open end so as to seal these openings. Preferably, the cooking bag employed in accordance with the present invention has only one opening.

In accordance with the present method the food product and seasoning composition may be introduced into the cooking bag separately, or together. Preferably, the seasoning composition is applied onto the food product before the thus seasoned food product is introduced into the cooking bag. The seasoning composition may suitably be applied onto the food product by, for instance, brushing, spreading, spraying, pouring, dipping, immersing etc.

According to another preferred embodiment, the seasoned food product is left at ambient or refrigeration conditions for not more than 30 minutes before the seasoned food product is introduced in the cooking bag. Even more preferably, the seasoned food product is kept at ambient or refrigeration conditions for not more than 10 minutes, most preferably for not more than 3 minutes before it is introduced into the cooking bag.

After the food product and the seasoning composition have been introduced into the cooking bag and before the filled cooking bag is introduced in the pan, the cooking bag is preferably closed by folding it. This form of closing offers the advantage that it allows hot gases (e.g. steam) to escape from the cooking bag while it is heated in the pan.

The cooking bag employed in accordance with the present invention preferably can withstand a temperature of 200°C, more preferably of 220°C for at least 15 minutes without degrading, e.g. without giving off smoke.

The quantity of food product introduced in the cooking bag preferably lies in the range of 50-1,200 g, more preferably of 100-1,000 g and most preferably of 200-600 g.

The food product that is cooked in the present method preferably comprises a meat product, a vegetable product and combinations thereof. Advantageously, at least 30 wt.% ,more preferably at least 90 wt.% and most preferably at least 100 wt.% of the food product is meat.

The amount of seasoning composition that is introduced into the cooking bag typically lies in the range of 1-100 g, more preferably of 2-50 g and most preferably of 4-25 g. Calculated as dry matter, the amount of seasoning composition that is introduced into the cooking bag typically is in the range of 1-50 g, more preferably of 1-25 g.

Expressed differently, the seasoning composition is preferably introduced into the cooking bag in an amount of 0.5-50%, more preferably of 1-20% and most preferably of 1-10% by weight of the food product.

According to a particularly preferred embodiment of the present method the seasoning composition is obtained by mixing a seasoning powder with a water- and/or oil-containing edible ingredient. Typically, the seasoning composition is obtained by mixing 10 parts by weight of the seasoning powder with 5-100 parts by weight, more preferably 10-80 parts by weight of the water-and/or oil-containing edible ingredient. Preferably, the seasoning composition so obtained is a (viscous) liquid or a paste.

The seasoning powder employed preferably is a dry blend comprising 20-100 wt.%, more preferably 50-100 wt.% and most preferably 80-100 wt.% seasoning ingredients selected from spices, herbs, salt and combinations thereof.

The water- and/or oil-containing edible ingredient used in the preparation of the seasoning composition is advantageously selected from the group of aqueous liquids, oil, butter, margarine, dressings, mayonnaise, yogurt, quark, soft cheese, cream, ketchup and combinations thereof.

After the introduction of the food product and the seasoning composition into the cooking bag, the cooking bag may be kept under ambient or refrigerator conditions for some time before the introduction of the cooking bag into the pan. Preferably, the cooking bag is introduced into the pan within 10 minutes, more preferably within 5 minutes and most preferably within 1 minute after both food product and seasoning composition have been introduced into the cooking bag.

The pan holding the cooking bag is heated to cook the seasoned food product within the cooking bag by supplying heat to the bottom side of the pan. Heat may suitably be supplied to the pan by a stove. Although in principle any type of pan may be used in the present method, the use of a frying pan is preferred.

The cooking bag preferably is in direct contact with the inside of the frying pan during the cooking step. Furthermore, it is preferred that the cooking step is conducted in an open pan.

In order to properly cook the seasoned food product the cooking bag typically stays in the heated pan for at least 1 minute, more preferably for at least 3 minutes minutes and most preferably 5-20 minutes.

According to a particularly preferred embodiment, the cooking bag holding the seasoned food product is turned after it has been heated in the pan for at least 30 seconds and is left in the pan for at least another 30 seconds. Typically, the cooking bag is turned at least 2 times, more preferably at least 4 times during the cooking in the pan.

The inside of the cooking bag that is employed in accordance with the present invention is coated with a non-sticky coating. Such an internal coating facilitates the introduction and removal of the cooked seasoned food product. In addition, it prevents the seasoned food product from getting stuck to the cooking bag during the cooking process.

According to a particularly preferred embodiment, both the inside and the outside of the cooking bag are coated with a non-sticky coating. The presence of a coating on both the inside and the outside of the cooking bag improves its oil impermeability. In addition, the external non-sticky coating helps to prevent sticking of the bag to the hot surface of the pan.

The non-sticky coating(s) employed can be made of any coating material that reduces adhesion of the seasoned food product to the interior of the cooking bag, provided it is heat resistant and provided the material is suitable for packaging food products. Particularly good results can be obtained if the non-sticky coating comprises a heat-resistent material selected from silicone, aluminium, PET (polyethylene terephtalate), Teflon (polytetrafluorethylene). Most preferably, the non-sticky coating is silicone based.

The non-sticky coating typically has a thickness of 0.3-20 µm, more preferably of 0.7-10 µm, most preferably of 1-5 µm

The walls of the cooking bag (including coating and laminate layers) typically have a thickness of 10-100 µm, more preferably of 20-80 µm, most preferably of 25-50 µm.

Another aspect of the present invention is a packaged seasoning product comprising:
- a package;
- 15-100 g of a seasoning component that is contained within the package; and
- an empty cooking bag that is also contained within the package
wherein the cooking bag is made of heat- and oil-resistant paper, the inside of the cooking bag being coated with and/or forming a laminate with one or more layers selected from an aluminium layer and a heat-stable polymer layer, said cooking bag having an internal volume of 0.1-2 litre and comprising an opening with a maximum diameter of 5-50 cm; and
wherein the cooking bag is a cooking bag (A) comprising:
- a folded sheet comprising a front sheet and a back sheet that are operatively associated with each other by a folded edge;
- the front sheet comprising second, third and fourth edges so disposed that the third edge is substantially parallel to the folded edge and the second and fourth edges are substantially parallel to one another;
- the back sheet comprising first, second, third and fourth edges so disposed that the third edge is substantially parallel to the folded edge and the second and fourth edges are substantially parallel to one another, the second edge of the first sheet being operatively associated with the second edge of the second sheet by stitching, the third edge of the first sheet being operatively associated with the third edge of the second sheet by stitching;
- an opening formed by the first and second sheets defined in part by the fourth edge of the first sheet and the fourth edge of the second sheet;
or wherein the cooking bag is a cooking bag (B) comprising:
- a folded sheet comprising a front sheet and a back sheet that are operatively associated with each other by a folded edge;
- the front sheet comprising second, third and fourth edges so disposed that the third edge is substantially parallel to the folded edge and the second and fourth edges are substantially parallel to one another;
- the back sheet comprising first, second, third and fourth edges so disposed that the third edge is substantially parallel to the folded edge and the second and fourth edges are substantially parallel to one another, the second edge of the first sheet being operatively associated with the second edge of the second sheet by stitching, the fourth edge of the first sheet being operatively associated with the fourth edge of the second sheet by stitching;
- an opening formed by the first and second sheets defined in part by the third edge of the first sheet and the third edge of the second sheet;
- or wherein the cooking bag is a cooking bag (C) comprising:
- a first sheet comprising first, second, third and fourth edges so disposed that the first and third edges are substantially parallel to one another, and the second and fourth edges are substantially parallel to one another;
- a second sheet comprising first, second, third and fourth edges so disposed that the first and third edges are substantially parallel to one another, and the second and fourth edges are substantially parallel to one another, the first edge of the first sheet being operatively associated with the first edge of the second sheet by stitching, the second edge of the first sheet being operatively associated with the second edge of the second sheet by stitching, the third edge of the first sheet being operatively associated with the third edge of the second sheet by stitching;
- an opening formed by the first and second sheets defined in part by the fourth edge of the first sheet and the fourth edge of the second sheet.

The empty cooking bag contained in the package preferably is a cooking bag as defined herein before.

The seasoning component contained in the package preferably is a seasoning powder, a seasoning paste or a seasoning liquid. Most preferably, the seasoning component is a seasoning powder, especially a seasoning powder as defined herein before.

The amount of seasoning component contained in the present package preferably lies within the range of 18-80 g, most preferably of 20-60 g.

According to particular preferred embodiment of the packaged seasoning product, the package comprises at least two chambers, wherein one chamber contains the seasoning and the other chamber contains the empty cooking bag.

Examples of packages that can be employed in the present product include pouches, containers, cans, tubs, cartons. According to a particularly preferred embodiment, the package is a pouch, preferably a pouch comprising a layer of food grade polymeric material and a layer of non-polymeric material (e.g. aluminium or a metallised layer).

Unlike the cooking bag, the package of the present product typically is not heat-resistant. The package typically has an internal volume of 40-500 ml, more preferably of 50-200 ml and most preferably of 60-100 ml.

The package of the present product preferably comprises instructions for preparing a ready-to-eat cooked food product, notably instructions advising a consumer to do so by introducing a food product together with the seasoning component in the empty bag and heating the so enclosed food product in a pan, optionally after allowing the food product to become marinated. These instructions may indicate that the seasoning component is to be applied onto the food product as such or, alternatively, they may indicate that the seasoning is to be mixed with other ingredients (e.g. an oil- and/or water-containing edible ingredient) before being applied.

The cooking bag should be sufficiently large to allow to be closed by folding. Preferably, the foldable bage has an internal volume of 0.15-1.5 litre, most preferably of 0.2-1 litre.

The cooking bag preferably comprises an opening having a maximum diameter of 6-40 cm, more preferably of 8-25 cm.

The cooking bag preferably is rectangular in shape. Even more preferably, the length of the foldable bag is 10-50 cm and the width of the foldable bag is 10-50 cm.

The cooking bag is preferably contained in the packages as a folded item. Even more preferably, the folded foldable bag has a length of 3-15 cm and a width of 1-10 cm. Typically, the folded foldable bag comprises at least 4 folds (i.e. at least 16 layers).

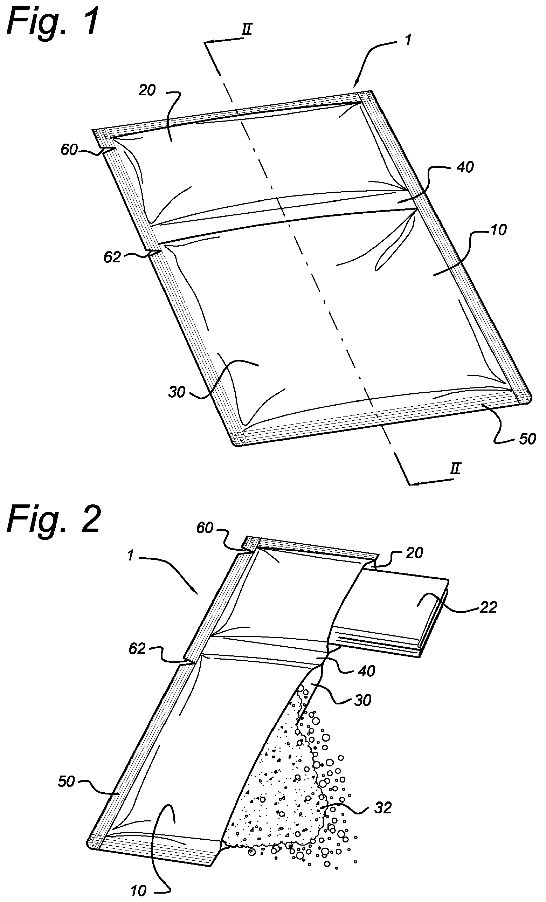

In a general embodiment shown in Fig. 1 the present invention provides a packaged seasoning product **1**. Pouch **10** comprises a first chamber **20** and a second chamber **30**. A seal **40** separates the first chamber **20** and the second chamber **30**. The pouch **10** can be made, for example, from two plies of laminate that are sealed about the periphery of the pouch **10** at the edges to form an outer seal **50**. A portion of the outer seal **50** can define notches **60** and **62**. The notches **60** and **62** allow a consumer to more easily tear open the pouch **10** and thus gain access to the first chamber **20** and the second chamber **30**.

The cross sectional view of the packaged seasoning product **1** shown in Fig. 2 depicts pouch **10**. The pouch **10** comprises the first chamber **20** holding a folded cooking bag **22** and the second chamber **30** having a seasoning mix **32** stored therein.

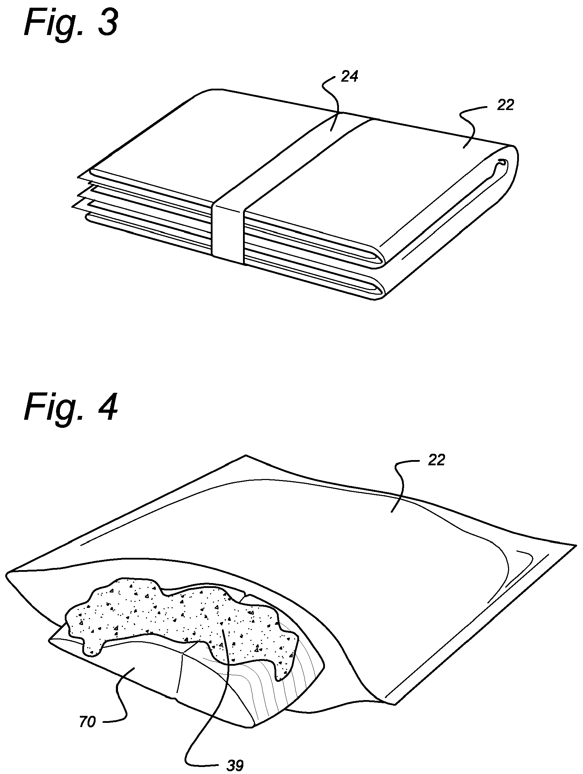

Fig. 3 depicts a close-up of the folded bag **22**. The bag **22** has been folded 6 times is held together by tape **24**.

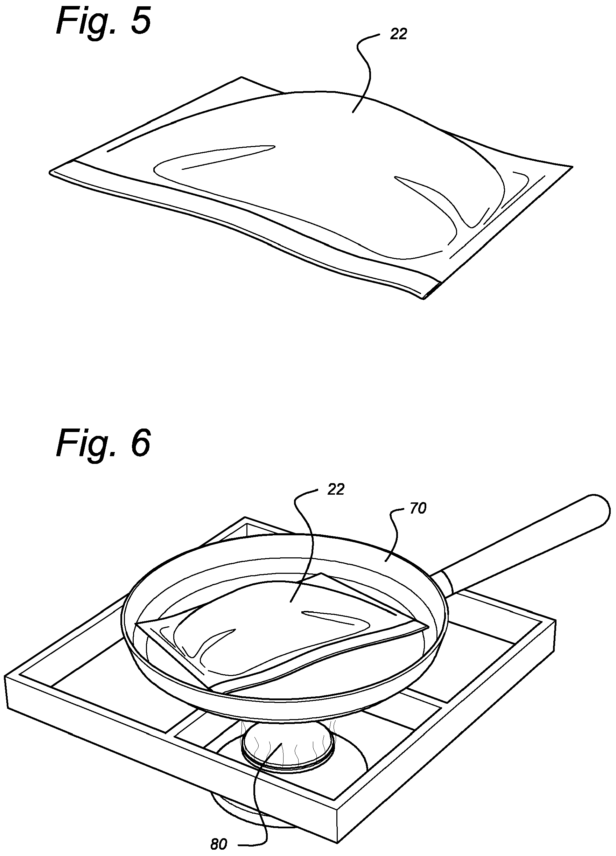

To use the packaged seasoning product **1** in the preparation of a cooked foodstuff by a consumer may, for instance, proceed as follows (see Fig. 4, 5 and 6, wherein the cooking bag shown is not as defined by the present invention):
- Tear pouch **10** at notch **60** to access the first chamber **20**. Remove the folded cooking bag **22** from the first chamber **20** and peel off the tape **24**. Completely unfold the bag **22** so it is ready for use.
- Tear pouch **10** at notch **62** to create an opening in the second chamber **30**.
- Introduce the seasoning mix **32** through the opening in the second chamber **30** into a bowl containing oil and stir the contents of the bowl to prepare a seasoning composition **39**.
- Apply a seasoning composition **34** onto a food product **70** (e.g. a piece of chicken breast)
- Introduce the food product **70** and the seasoning composition **34** into the opened cooking bag **22** (see Fig. 4).
- Close the cooking bag **22** by folding it (see Fig. 5).
- Introduce the closed cooking bag **22** into a frying pan **70** that is heated on a stove **80** (Fig. 6).
- Turn the cooking bag **22** every 2 minutes and heat the cooking bag **22** in the frying pan **70** for 10 minutes.
- Remove the cooking bag **22** from the frying pan **70**.
- Open the bag **22** and remove the cooked seasoned food product **70** from the opened bag **22**.

The cooked seasoned foodstuff so obtained is ready to serve and may be combined with other food components, e.g. pasta, rice, vegetables, potatoes, French fries, sauce, etc.

The invention is further illustrated by the following non-limiting examples.

### EXAMPLES

### Example 1

Seasoned chicken breast was prepared in a frying pan using four different frying procedures.

The pieces of chicken breast used had a weight of 240-280 g. A seasoning paste was prepared by mixing a Paprika seasoning powder (consisting of salt, spices, sugar, vegetable powders, starch and herbs with a vegetable oil (75 g/100 ml). The pieces of chicken breast were marinated with the seasoning paste by gently spreading the paste onto the meat surface.

After the pieces of marinated chicken breast had been prepared in this fashion, they were prepared in a 25 cm Teflon coated frying pan that was heated on a gas hob to a temperature of 200-250°C.

The pieces of marinated chicken breast were prepared in the frying pan as such or using different paper devices as shown in Table 1.

**Table 1**

| Test | Device |
|---|---|
| A | None |
| B | Paper sheet - 300x200 mm, 40 g, parchment paper, silicone coated on both sides |
| C | Pager bag - 125x234 mm, 38 g, greaseproof paper, glued with ethylene vinyl based hot melt glue |
| D | Pager bag - 130x180 mm, 40 g, parchment paper, silicone coated on both sides. Bag made by sewing/stitching with polyester thread. |

The results of these tests are shown in Table 2

**Table 2**

| | A | B | C | D |
|---|---|---|---|---|
| Cooking time | 14 min. | 12-13 min. | 10 min. | 10 min. |
| Spattering | Oil spatters around the hob | | | |
| Smoke formation | Significant | Significant | Noticeable | Not noticeable |
| Appearance | Burned, no sauce | Roasted (dark) surface, no sauce | Roasted surface, with sauce | Roasted surface, with sauce |
| Taste | Very dry | Dry | Tender | Tender |
| Condition pan | Dirty | Dirty | A little dirty | Clean |

### Example 2

Marinated pieces of chicken breast were prepared in the same way as described in Example 1. This time the pieces of marinated chicken breast were prepared in the same paper bag that was used in test D of Example 1, using a frying pan, a micro wave oven or a conventional oven. The conditions used and the results obtained are shown in Table 3.

**Table 3**

| | Frying pan | Microwave oven | Conventional oven |
|---|---|---|---|
| Cooking conditions | 200-250°C | 700 W | 220°C, fan assisted |
| Cooking time | 10 min. | 8-10 min. | 25-30 min. |
| Appearance | Roasted surface, with sauce | Boiled appearance, water loss | Boiled appearance, no sauce |
| Taste | Tender | Dry inside, not tender | Dry not tender |

### Example 3

Marinated pieces of chicken breast were prepared in the same way as described in Example 1 using the 5 different paper bags described in Table 4.

**Table 4**

| | **1** | **2** | **A** | **B** | **C¹** |
|---|---|---|---|---|---|
| Paper type | Parchment | Glassine | Parchment | Glassine | Glassine |
| Sealing type | Stitching | Stitching | Glue | Glue | Glue |
| Coating inside | Silicone | Silicone | Silicone | None | Silicone |
| Coating outside | Silicone | None | Silicone | None | |
| Bag dimensions | 130×180mm | 130×180mm | 130×180mm | 130×180mm | 130×180mm |

| | | | | | |
|---|---|---|---|---|---|
| ¹ Bag as disclosed in Example 1of JP 2010254368. | | | | | |

The thread used in the stitching of bags 1 and 2 consisted of polyethylene terephthalate (PET). The results of the cooking tests are shown in Table 5

**Table 5**

| | **1** | **2** | **A** | **B** | **C** |
|---|---|---|---|---|---|
| Performance bag during heating | Remained closed | Remained closed | Bag opened | Bag opened | Bag opened |
| Smoke formation during heating | Minimal | Slight | Significant | Significant | Significant |
| Quality of the cooked product | Excellent | Very good | Not fully cooked | Burned | A little burned |
| Appearance of the cooked product | Roasted | Roasted | Roasted | Over roasted | Roasted |
| Appearance bag after cooking | No burns | No burns | No burns | Torn and burned | Burned |
| Appearance frying pan after cooking | Clean | Clean | Unclean | Unclean | Unclean |

The glued seals of bags A, B and C separated during heating of the bags in the frying pan. As a result seasoning and meat juice were released into the frying pan, thereby fouling the pan and contributing to smoke formation. The bags made from glassine paper were found to have less heat/oil resistance than the bags made from parchment paper, contributing to the burning of the meat during the cooking.

Opening of a bag during the cooking as observed for bags A, B and C causes steam to escape from the bag. As a result the meat takes longer to get fully cooked, while at the same time the outer surface becomes overcooked and starts to develop burns.

## Claims

1. A method of preparing a cooked seasoned food product, said method comprising:
• introducing a food product together with a seasoning composition into a cooking bag;
• introducing the cooking bag containing the food product and the seasoning composition into a pan;
• heating the pan holding the cooking bag to cook the seasoned food product within the cooking bag; and
• removing the cooked seasoned food product from the cooking bag
wherein the cooking bag is made of heat- and oil-resistant paper, the inside of the cooking bag being coated with and/or forming a laminate with one or more layers selected from an aluminium layer and a heat-stable polymer layer, said cooking bag having an internal volume of 0.1-2 litre and comprising an opening with a maximum diameter of 5-50 cm; and
wherein the cooking bag is a cooking bag (A) comprising:
• a folded sheet comprising a front sheet and a back sheet that are operatively associated with each other by a folded edge;
• the front sheet comprising second, third and fourth edges so disposed that the third edge is substantially parallel to the folded edge and the second and fourth edges are substantially parallel to one another;
• the back sheet comprising first, second, third and fourth edges so disposed that the third edge is substantially parallel to the folded edge and the second and fourth edges are substantially parallel to one another, the second edge of the first sheet being operatively associated with the second edge of the second sheet by stitching, the third edge of the first sheet being operatively associated with the third edge of the second sheet by stitching;
• an opening formed by the first and second sheets defined in part by the fourth edge of the first sheet and the fourth edge of the second sheet;
or wherein the cooking bag is a cooking bag (B) comprising:
• a folded sheet comprising a front sheet and a back sheet that are operatively associated with each other by a folded edge;
• the front sheet comprising second, third and fourth edges so disposed that the third edge is substantially parallel to the folded edge and the second and fourth edges are substantially parallel to one another;
• the back sheet comprising first, second, third and fourth edges so disposed that the third edge is substantially parallel to the folded edge and the second and fourth edges are substantially parallel to one another, the second edge of the first sheet being operatively associated with the second edge of the second sheet by stitching, the fourth edge of the first sheet being operatively associated with the fourth edge of the second sheet by stitching;
• an opening formed by the first and second sheets defined in part by the third edge of the first sheet and the third edge of the second sheet;
or wherein the cooking bag is a cooking bag (C) comprising:
• a first sheet comprising first, second, third and fourth edges so disposed that the first and third edges are substantially parallel to one another, and the second and fourth edges are substantially parallel to one another;
• a second sheet comprising first, second, third and fourth edges so disposed that the first and third edges are substantially parallel to one another, and the second and fourth edges are substantially parallel to one another, the first edge of the first sheet being operatively associated with the first edge of the second sheet by stitching, the second edge of the first sheet being operatively associated with the second edge of the second sheet by stitching, the third edge of the first sheet being operatively associated with the third edge of the second sheet by stitching;
• an opening formed by the first and second sheets defined in part by the fourth edge of the first sheet and the fourth edge of the second sheet.

2. Method according to claim 1, wherein the seasoning composition is obtained by mixing a seasoning powder with a water- and/or oil-containing edible ingredient.

3. Method according to claim 2, wherein the seasoning powder is a dry blend comprising 30-100 wt.% seasoning ingredients selected from spices, herbs, salt and combinations thereof.

4. Method according to claim 2 or 3, wherein the water- and/or oil-containing edible ingredient is selected from the group of aqueous liquids, oil, butter, margarine, dressings, mayonnaise, yogurt, quark, soft cheese, cream, ketchup and combinations thereof.

5. Method according to any one of the preceding claims, wherein 50-1,200 g of food product and 1-100 g of seasoning composition are introduced into the cooking bag.

6. Method according to any one of the preceding claims, wherein the cooking bag is turned after it has been heated in the pan for at least 30 seconds and is left in the pan for at least another 30 seconds.

7. Method according to any one of the preceding claims, wherein the food product comprises at least 30 wt.% of meat.

8. Method according to any one of the preceding claims, wherein EITHER
• the inside of the cooking bag is coated with a non-sticky coating comprising a heat-resistant material that is selected from silicone, aluminium, polyethylene terephtelate, polytetrafluoroethylene; OR
• the outside of the cooking bag is coated with a non-sticky coating comprising a heat-resistant material that is selected from silicone, aluminium, polyethylene terephtelate, polytetrafluoroethylene; OR
• both.

9. Method according to any one of the preceding claims, wherein the cooking bag is made of parchment paper.

10. A packaged seasoning product comprising:
• a package;
• 15-100 g of a seasoning component that is contained within the package; and
• an empty cooking bag that is also contained within the package;
wherein the cooking bag is made of heat- and oil-resistant paper, the inside of the cooking bag being coated with and/or forming a laminate with one or more layers selected from an aluminium layer and a heat-stable polymer layer, said cooking bag having an internal volume of 0.1-2 litre and comprising an opening with a maximum diameter of 5-50 cm; and
wherein the cooking bag is a cooking bag (A) comprising:
• a folded sheet comprising a front sheet and a back sheet that are operatively associated with each other by a folded edge;
• the front sheet comprising second, third and fourth edges so disposed that the third edge is substantially parallel to the folded edge and the second and fourth edges are substantially parallel to one another;
• the back sheet comprising first, second, third and fourth edges so disposed that the third edge is substantially parallel to the folded edge and the second and fourth edges are substantially parallel to one another, the second edge of the first sheet being operatively associated with the second edge of the second sheet by stitching, the third edge of the first sheet being operatively associated with the third edge of the second sheet by stitching;
• an opening formed by the first and second sheets defined in part by the fourth edge of the first sheet and the fourth edge of the second sheet;
or wherein the cooking bag is a cooking bag (B) comprising:
• a folded sheet comprising a front sheet and a back sheet that are operatively associated with each other by a folded edge;
• the front sheet comprising second, third and fourth edges so disposed that the third edge is substantially parallel to the folded edge and the second and fourth edges are substantially parallel to one another;
• the back sheet comprising first, second, third and fourth edges so disposed that the third edge is substantially parallel to the folded edge and the second and fourth edges are substantially parallel to one another, the second edge of the first sheet being operatively associated with the second edge of the second sheet by stitching, the fourth edge of the first sheet being operatively associated with the fourth edge of the second sheet by stitching;
• an opening formed by the first and second sheets defined in part by the third edge of the first sheet and the third edge of the second sheet;
or wherein the cooking bag is a cooking bag (C) comprising:
• a first sheet comprising first, second, third and fourth edges so disposed that the first and third edges are substantially parallel to one another, and the second and fourth edges are substantially parallel to one another;
• a second sheet comprising first, second, third and fourth edges so disposed that the first and third edges are substantially parallel to one another, and the second and fourth edges are substantially parallel to one another, the first edge of the first sheet being operatively associated with the first edge of the second sheet by stitching, the second edge of the first sheet being operatively associated with the second edge of the second sheet by stitching, the third edge of the first sheet being operatively associated with the third edge of the second sheet by stitching;
• an opening formed by the first and second sheets defined in part by the fourth edge of the first sheet and the fourth edge of the second sheet.

11. Packaged seasoning product according to claim 10, wherein EITHER:
• the inside of the cooking bag is coated with a non-sticky coating comprising a heat-resistant material that is selected from silicone, aluminium, polyethylene terephtelate, polytetrafluoroethylene; OR
• the outside of the cooking bag is coated with a non-sticky coating comprising a heat-resistant material that is selected from silicone, aluminium, polyethylene terephtelate, polytetrafluoroethylene; OR
• both.

12. Packaged seasoning product according to any one of claims 10-11, wherein the cooking bag is made of parchment paper.

13. Packaged seasoning product according to any one of claims 10-12, wherein the walls of the cooking bag have a thickness of 10-100 µm.

14. Packaged seasoning product according to any one of claims 10-13, wherein the cooking bag is folded and the folded cooking bag has a length of 3-15 cm and a width of 1-10 cm.

15. Packaged seasoning product according to any one of claims 10-14, wherein the package comprises instructions to prepare a ready-to-eat cooked food product by introducing a food product together with the seasoning in the cooking bag and by cooking the so enclosed food product by heating the cooking bag containing the food product and the seasoning in a pan.

## Patentansprüche

1. Verfahren zum Zubereiten eines gekochten gewürzten Lebensmittelprodukts, wobei das Verfahren die folgenden Schritte umfasst:
• Einführen eines Lebensmittelprodukts zusammen mit einer Würzmischung in einen Kochbeutel;
• Einsetzen des Kochbeutels, der das Lebensmittelprodukt und die Würzmischung enthält, in eine Pfanne;
• Erhitzen der Pfanne, die den Kochbeutel enthält, um das gewürzte Lebensmittelprodukt in dem Kochbeutel zu kochen; und
• Entfernen des gekochten gewürzten Lebensmittelprodukts aus dem Kochbeutel
wobei der Kochbeutel aus hitze- und ölbeständigem Papier hergestellt ist, wobei die Innenseite des Kochbeutels mit einem Laminat mit einer oder mehreren Schichten, die aus einer Aluminiumlage und einer hitzebeständigen Polymerlage ausgewählt sind, beschichtet ist und/oder dieses bildet, wobei der Kochbeutel ein Innenvolumen von 0,1-2 Liter aufweist und eine Öffnung mit einem maximalen Durchmesser von 5-50 cm umfasst; und
wobei der Kochbeutel ein Kochbeutel (A) ist, der Folgendes umfasst:
• eine gefaltete Lage, die eine vordere Lage und eine hintere Lage umfasst, die durch eine gefaltete Kante betriebstechnisch miteinander verbunden sind;
• wobei die vordere Lage eine zweite, eine dritte und eine vierte Kante umfasst, die so angeordnet sind, dass die dritte Kante im Wesentlichen parallel zu der gefalteten Kante ist und die zweite und die vierte Kante im Wesentlichen parallel zueinander sind;
• wobei die hintere Lage eine erste, eine zweite, eine dritte und eine vierte Kante umfasst, die so angeordnet sind, dass die dritte Kante im Wesentlichen parallel zu der gefalteten Kante ist und die zweite und die vierte Kante im Wesentlichen parallel zueinander sind, wobei die zweite Kante der ersten Lage mit der zweiten Kante der zweiten Lage durch eine Naht betriebstechnisch verbunden ist, wobei die dritte Kante der ersten Lage mit der dritten Kante der zweiten Lage durch eine Naht betriebstechnisch verbunden ist;
• eine Öffnung, die durch die erste und die zweite Lage gebildet ist, die teilweise durch die vierte Kante der ersten Lage und die vierte Kante der zweiten Lage definiert ist;
oder wobei der Kochbeutel ein Kochbeutel (B) ist, der Folgendes umfasst:
• eine gefaltete Lage, die eine vordere Lage und eine hintere Lage umfasst, die durch eine gefaltete Kante betriebstechnisch miteinander verbunden sind;
• wobei die vordere Lage eine zweite, eine dritte und eine vierte Kante umfasst, die so angeordnet sind, dass die dritte Kante im Wesentlichen parallel zu der gefalteten Kante ist und die zweite und die vierte Kante im Wesentlichen parallel zueinander sind;
• wobei die hintere Lage eine erste, eine zweite, eine dritte und eine vierte Kante umfasst, die so angeordnet sind, dass die dritte Kante im Wesentlichen parallel zu der gefalteten Kante ist und die zweite und die vierte Kante im Wesentlichen parallel zueinander sind, wobei die zweite Kante der ersten Lage mit der zweiten Kante der zweiten Lage durch eine Naht betriebstechnisch verbunden ist, wobei die vierte Kante der ersten Lage mit der vierten Kante der zweiten Lage durch eine Naht betriebstechnisch verbunden ist;
• eine Öffnung, die durch die erste und die zweite Lage gebildet ist, die teilweise durch die dritte Kante der ersten Lage und die dritte Kante der zweiten Lage definiert ist;
oder wobei der Kochbeutel ein Kochbeutel (C) ist, der Folgendes umfasst:
• eine erste Lage, die eine erste, eine zweite, eine dritte und eine vierte Kante umfasst, die so angeordnet sind, dass die erste und die dritte Kante im Wesentlichen parallel zueinander sind und dass die zweite und die vierte Kante im Wesentlichen parallel zueinander sind;
• eine zweite Lage, die eine erste, eine zweite, eine dritte und eine vierte Kante umfasst, die so angeordnet sind, dass die erste und die dritte Kante im Wesentlichen parallel zueinander sind und dass die zweite und die vierte Kante im Wesentlichen parallel zueinander sind, wobei die erste Kante der ersten Lage mit der ersten Kante der zweiten Lage durch eine Naht betriebstechnisch verbunden ist, wobei die zweite Kante der ersten Lage mit der zweiten Kante der zweiten Lage durch eine Naht betriebstechnisch verbunden ist, wobei die dritte Kante der ersten Lage mit der dritten Kante der zweiten Lage durch eine Naht betriebstechnisch verbunden ist;
• eine Öffnung, die durch die erste und die zweite Lage gebildet ist, die teilweise durch die vierte Kante der ersten Lage und die vierte Kante der zweiten Lage definiert ist.

2. Verfahren nach Anspruch 1, wobei die Würzmischung durch Mischen eines Gewürzpulvers mit einem essbaren Ingrediens, das Wasser- und/oder Öl enthält, erhalten wird.

3. Verfahren nach Anspruch 2, wobei das Gewürzpulver eine Trockenmischung ist, die 30-100 Gew.-% Würzingredienzien umfasst, die aus Gewürzen, Kräutern, Salz und Kombinationen davon ausgewählt werden.

4. Verfahren nach Anspruch 2 oder 3, wobei das Wasser und/oder Öl enthaltende essbare Ingrediens aus der Gruppe bestehend aus wässrigen Flüssigkeiten, Öl, Butter, Margarine, Dressings, Mayonnaise, Joghurt, Quark, Weichkäse, Sahne, Ketchup und Kombinationen davon ausgewählt wird.

5. Verfahren nach einem der vorhergehenden Ansprüche, wobei 50-1200 g Lebensmittelprodukt und 1-100 g Würzmischung in den Kochbeutel eingeführt werden.

6. Verfahren nach einem der vorhergehenden Ansprüche, wobei der Kochbeutel umgedreht wird, nachdem er in der Pfanne für wenigstens 30 Sekunden erhitzt worden ist, und für wenigstens weitere 30 Sekunden in der Pfanne belassen wird.

7. Verfahren nach einem der vorhergehenden Ansprüche, wobei das Lebensmittelprodukt wenigstens 30 Gew.-% Fleisch enthält.

8. Verfahren nach einem der vorhergehenden Ansprüche, wobei ENTWEDER
• das Innere des Kochbeutels mit einer Antihaftbeschichtung, die ein hitzebeständiges Material umfasst, das aus Silikon, Aluminium, Polyethylenterephthalat und Polytetrafluorethylen ausgewählt ist, beschichtet ist; ODER
• das Äußere des Kochbeutels mit einer Antihaftbeschichtung, die ein hitzebeständiges Material umfasst, das aus Silikon, Aluminium, Polyethylenterephthalat und Polytetrafluorethylen ausgewählt wird, beschichtet ist; ODER
• beides zutrifft.

9. Verfahren nach einem der vorhergehenden Ansprüche, wobei der Kochbeutel aus Pergamentpapier hergestellt ist.

10. Verpacktes Würzprodukt, das Folgendes umfasst:
• eine Packung
• 15-100 g eines Würzbestandteils, der in der Packung enthalten ist; und
• einen leeren Kochbeutel, der ebenfalls in der Packung enthalten ist; wobei der Kochbeutel aus hitze- und ölbeständigem Papier hergestellt ist, wobei die Innenseite des Kochbeutels mit einem Laminat mit einer oder mehreren Schichten, die aus einer Aluminiumlage und einer hitzebeständigen Polymerlage ausgewählt werden, beschichtet ist und/oder dieses bildet, wobei der Kochbeutel ein Innenvolumen von 0,1-2 Liter aufweist und eine Öffnung mit einem maximalen Durchmesser von 5-50 cm umfasst; und
wobei der Kochbeutel ein Kochbeutel (A) ist, der Folgendes umfasst:
• eine gefaltete Lage, die eine vordere Lage und eine hintere Lage umfasst, die durch eine gefaltete Kante betriebstechnisch miteinander verbunden sind;
• wobei die vordere Lage eine zweite, eine dritte und eine vierte Kante umfasst, die so angeordnet sind, dass die dritte Kante im Wesentlichen parallel zu der gefalteten Kante ist und die zweite und die vierte Kante im Wesentlichen parallel zueinander sind;
• wobei die hintere Lage eine erste, eine zweite, eine dritte und eine vierte Kante umfasst, die so angeordnet sind, dass die dritte Kante im Wesentlichen parallel zu der gefalteten Kante ist und die zweite und die vierte Kante im Wesentlichen parallel zueinander sind, wobei die zweite Kante der ersten Lage mit der zweiten Kante der zweiten Lage durch eine Naht betriebstechnisch verbunden ist, wobei die dritte Kante der ersten Lage mit der dritten Kante der zweiten Lage durch eine Naht betriebstechnisch verbunden ist;
• eine Öffnung, die durch die erste und die zweite Lage gebildet ist, die teilweise durch die vierte Kante der ersten Lage und die vierte Kante der zweiten Lage definiert ist;
oder wobei der Kochbeutel ein Kochbeutel (B) ist, der Folgendes umfasst:
• eine gefaltete Lage, die eine vordere Lage und eine hintere Lage umfasst, die durch eine gefaltete Kante betriebstechnisch miteinander verbunden sind;
• wobei die vordere Lage eine zweite, eine dritte und eine vierte Kante umfasst, die so angeordnet sind, dass die dritte Kante im Wesentlichen parallel zu der gefalteten Kante ist und die zweite und die vierte Kante im Wesentlichen parallel zueinander sind;
• wobei die hintere Lage eine erste, eine zweite, eine dritte und eine vierte Kante umfasst, die so angeordnet sind, dass die dritte Kante im Wesentlichen parallel zu der gefalteten Kante ist und die zweite und die vierte Kante im Wesentlichen parallel zueinander sind, wobei die zweite Kante der ersten Lage mit der zweiten Kante der zweiten Lage durch eine Naht betriebstechnisch verbunden ist, wobei die vierte Kante der ersten Lage mit der vierten Kante der zweiten Lage durch eine Naht betriebstechnisch verbunden ist;
• eine Öffnung, die durch die erste und die zweite Lage gebildet ist, die teilweise durch die dritte Kante der ersten Lage und die dritte Kante der zweiten Lage definiert ist;
oder wobei der Kochbeutel ein Kochbeutel (C) ist, der Folgendes umfasst:
• eine erste Lage, die eine erste, eine zweite, eine dritte und eine vierte Kante umfasst, die so angeordnet sind, dass die erste und die dritte Kante im Wesentlichen parallel zueinander sind und dass die zweite und die vierte Kante im Wesentlichen parallel zueinander sind;
• eine zweite Lage, die eine erste, eine zweite, eine dritte und eine vierte Kante umfasst, die so angeordnet sind, dass die erste und die dritte Kante im Wesentlichen parallel zueinander sind und dass die zweite und die vierte Kante im Wesentlichen parallel zueinander sind, wobei die erste Kante der ersten Lage mit der ersten Kante der zweiten Lage durch eine Naht betriebstechnisch verbunden ist, wobei die zweite Kante der ersten Lage mit der zweiten Kante der zweiten Lage durch eine Naht betriebstechnisch verbunden ist, wobei die dritte Kante der ersten Lage mit der dritten Kante der zweiten Lage durch eine Naht betriebstechnisch verbunden ist;
eine Öffnung, die durch die erste und die zweite Lage gebildet ist, die teilweise durch die vierte Kante der ersten Lage und die vierte Kante der zweiten Lage definiert ist.

11. Verpacktes Würzprodukt nach Anspruch 10, wobei ENTWEDER
• das Innere des Kochbeutels mit einer Antihaftbeschichtung, die ein hitzebeständiges Material umfasst, das aus Silikon, Aluminium, Polyethylenterephthalat und Polytetrafluorethylen ausgewählt ist, beschichtet ist; ODER
• das Äußere des Kochbeutels mit einer Antihaftbeschichtung, die ein hitzebeständiges Material umfasst, das aus Silikon, Aluminium, Polyethylenterephthalat und Polytetrafluorethylen ausgewählt ist, beschichtet ist; ODER
• beides zutrifft.

12. Verpacktes Würzprodukt nach einem der Ansprüche 10-11, wobei der Kochbeutel aus Pergamentpapier hergestellt ist.

13. Verpacktes Würzprodukt nach einem der Ansprüche 10-12, wobei die Wände des Kochbeutels eine Dicke von 10-100 µm aufweisen.

14. Verpacktes Würzprodukt nach einem der Ansprüche 10-13, wobei der Kochbeutel gefaltet ist und der gefaltete Kochbeutel eine Länge von 3-15 cm und eine Breite von 1-10 cm aufweist.

15. Verpacktes Würzprodukt nach einem der Ansprüche 10-14, wobei die Packung Anweisungen zum Zubereiten eines gekochten Lebensmittel-Fertigprodukts durch Einführen eines Lebensmittelprodukts zusammen mit dem Gewürz in den Kochbeutel und durch Kochen des so umschlossenen Lebensmittelprodukts mittels Erhitzen des Kochbeutels, der das Lebensmittelprodukt und das Gewürz enthält, in einer Pfanne umfasst.

## Revendications

1. Procédé de préparation d'un produit alimentaire assaisonné cuit, ledit procédé comprenant :
• l'introduction d'un produit alimentaire avec une composition d'assaisonnement dans un sac de cuisson ;
• l'introduction du sac de cuisson contenant le produit alimentaire et la composition d'assaisonnement dans une casserole ;
• le chauffage de la casserole contenant le sac de cuisson pour cuire le produit alimentaire assaisonné dans le sac de cuisson ; et
• le prélèvement du produit alimentaire assaisonné cuit du sac de cuisson
dans lequel le sac de cuisson est constitué de papier résistant à la chaleur et à l'huile, l'intérieur du sac de cuisson étant revêtu avec et/ou formant un stratifié avec une ou plusieurs couches choisies parmi une couche d'aluminium et une couche de polymère stable à la chaleur, ledit sac de cuisson présentant un volume interne de 0,1-2 litres et comprenant une ouverture avec un diamètre maximal de 5-50 cm ; et
dans lequel le sac de cuisson est un sac de cuisson (A) comprenant :
• une feuille pliée comprenant une feuille avant et une feuille arrière qui sont associées opérationnellement l'une à l'autre par un bord plié ;
• la feuille avant comprenant des second, troisième et quatrième bords disposés de sorte que le troisième bord est pratiquement parallèle au bord plié et les second et quatrième bords sont pratiquement parallèles l'un à l'autre ;
• la feuille arrière comprenant des premier, second, troisième et quatrième bords disposés de sorte que le troisième bord est pratiquement parallèle au bord plié et les second et quatrième bords sont pratiquement parallèles l'un à l'autre, le second bord de la première feuille étant associé opérationnellement au second bord de la seconde feuille par piqûre, le troisième bord de la première feuille étant associé opérationnellement au troisième bord de la seconde feuille par piqûre ;
• une ouverture formée par les première et seconde feuilles définie en partie par le quatrième bord de la première feuille et le quatrième bord de la seconde feuille ;
ou dans lequel le sac de cuisson est un sac de cuisson (B) comprenant :
• une feuille pliée comprenant une feuille avant et une feuille arrière qui sont associées opérationnellement l'une à l'autre par un bord plié ;
• la feuille avant comprenant des second, troisième et quatrième bords disposés de sorte que le troisième bord est pratiquement parallèles au bord plié et les second et quatrième bords sont pratiquement parallèles l'un à l'autre ;
• la feuille arrière comprenant des premier, second, troisième et quatrième bords disposés de sorte que le troisième bord est pratiquement parallèle au bord plié et les second et quatrième bords sont pratiquement parallèles l'un à l'autre, le second bord de la première feuille étant associé opérationnellement au second bord de la seconde feuille par piqûre, le quatrième bord de la première feuille étant associé opérationnellement au quatrième bord de la seconde feuille par piqûre ;
• une ouverture formée par les première et seconde feuilles définie en partie par le troisième bord de la première feuille et le troisième bord de la seconde feuille ;
ou dans lequel le sac de cuisson est un sac de cuisson (C) comprenant :
• une première feuille comprenant des premier, second, troisième et quatrième bords disposés de sorte que les premier et troisième bords sont pratiquement parallèles l'un à l'autre, et les second et quatrième bords sont pratiquement parallèles l'un à l'autre ;
• une seconde feuille comprenant des premier, second, troisième et quatrième bords disposés de sorte que les premier et troisième bords sont pratiquement parallèles l'un à l'autre, et les second et quatrième bords sont pratiquement parallèles l'un à l'autre, le premier bord de la première feuille étant associé opérationnellement au premier bord de la seconde feuille par piqûre, le second bord de la première feuille étant associé opérationnellement au second bord de la seconde feuille par piqûre, le troisième bord de la première feuille étant associé opérationnellement au troisième bord de la seconde feuille par piqûre ;
• une ouverture formée par les première et seconde feuilles définie en partie par le quatrième bord de la première feuille et le quatrième bord de la seconde feuille.

2. Procédé, selon la revendication 1, dans lequel la composition d'assaisonnement est obtenue en mélangeant une poudre d'assaisonnement avec un ingrédient comestible contenant de Peau et/ou de l'huile.

3. Procédé selon la revendication 2, dans lequel la poudre d'assaisonnement est une combinaison sèche comprenant 30-100 % en masse d'ingrédients d'assaisonnement choisis parmi des épices, des herbes, du sel et des combinaisons de ceux-ci.

4. Procédé selon la revendication 2 ou 3, dans lequel l'ingrédient comestible contenant de l'eau et/ou de l'huile est choisi dans le groupe de liquides aqueux, d'huile, de beurre, de margarine, de vinaigrettes, de mayonnaise, de yaourt, de fromage blanc, de fromage à pâte molle, de crème, de ketchup et de combinaisons de ceux-ci.

5. Procédé selon l'une quelconque des revendications précédentes, dans lequel 50-1 200 g de produit alimentaire et 1-100 g de composition d'assaisonnement sont introduits dans le sac de cuisson.

6. Procédé selon l'une quelconque des revendications précédentes, dans lequel le sac de cuisson est retourné après qu'il a été chauffé dans la casserole pendant au moins 30 secondes et est laissé dans la casserole pendant au moins 30 autres secondes.

7. Procédé selon l'une quelconque des revendications précédentes, dans lequel le produit alimentaire comprend au moins 30 % en masse de viande.

8. Procédé selon l'une quelconque des revendications précédentes, dans lequel soit
• l'intérieur du sac de cuisson est revêtu avec un revêtement non collant comprenant un matériau résistant à la chaleur qui est choisi parmi du silicone, de l'aluminium, du polyéthylène téréphtalate, du polytétrafluoroéthylène ; soit
• l'extérieur du sac de cuisson est revêtu avec un revêtement non collant comprenant un matériau résistant à la chaleur qui est choisi parmi du silicone, de l'aluminium, du polyéthylène téréphtalate, du polytétrafluoroéthylène ; soit
• les deux.

9. Procédé selon l'une quelconque des revendications précédentes, dans lequel le sac de cuisson est constitué de papier sulfurisé.

10. Produit d'assaisonnement emballé comprenant :
• un emballage ;
• 15-100 g d'un constituant d'assaisonnement qui est contenu dans l'emballage ; et
• un sac de cuisson vide qui est également contenu dans l'emballage ;
dans lequel le sac de cuisson est constitué de papier résistant à la chaleur et à l'huile, l'intérieur du sac de cuisson étant revêtu avec et/ou formant un stratifié avec une ou plusieurs couches choisies parmi une couche d'aluminium et une couche polymère stable à la chaleur, ledit sac de cuisson présentant un volume interne de 0,1-2 litres et comprenant une ouverture avec un diamètre maximal de 5-50 cm ; et
dans lequel le sac de cuisson est un sac de cuisson (A) comprenant :
• une feuille pliée comprenant une feuille avant et une feuille arrière qui sont associées opérationnellement l'une à l'autre par un bord plié ;
• la feuille avant comprenant des second, troisième et quatrième bords disposés de sorte que le troisième bord est pratiquement parallèle au bord plié et les second et quatrième bords sont pratiquement parallèles l'un à l'autre ;
• la feuille arrière comprenant des premier, second, troisième et quatrième bords disposés de sorte que le troisième bord est pratiquement parallèle au bord plié et les second et quatrième bords sont pratiquement parallèles l'un à l'autre, le second bord de la première feuille étant associé opérationnellement avec le second bord de la seconde feuille par piqûre, le troisième bord de la première feuille étant associé opérationnéllement avec le troisième bord de la seconde feuille par piqûre ;
• une ouverture formée par les première et seconde feuilles définie en partie par le quatrième bord de la première feuille et le quatrième bord de la seconde feuille ;
ou dans lequel le sac de cuisson est un sac de cuisson (B) comprenant :
• une feuille pliée comprenant une feuille avant et une feuille arrière qui sont associées opérationnellement l'une à l'autre par un bord plié ;
• la feuille avant comprenant des second, troisième et quatrième bords disposés de sorte que le troisième bord est pratiquement parallèle au bord plié et les second et quatrième bords sont pratiquement parallèles l'un à l'autre;
• la feuille arrière comprenant des premier, second, troisième et quatrième bords disposés de sorte que le troisième bord est pratiquement parallèle au bord plié et les second et quatrième bords sont pratiquement parallèles l'un à l'autre, le second bord de la première feuille étant associé opérationnellement au second bord de la seconde feuille par piqûre, le quatrième bord de la première feuille étant associé opérationnellement au quatrième bord de la seconde feuille par piqûre ;
• une ouverture formée par les première et seconde feuilles définie en partie par le troisième bord de la première feuille et le troisième bord de la seconde feuille ;
ou dans lequel le sac de cuisson est un sac de cuisson (C) comprenait
• une première feuille comprenant des premier, second, troisième et quatrième bords disposés de sorte que les premier et troisième bords sont pratiquement parallèles l'un à l'autre, et les second et quatrième bords sont pratiquement parallèles l'un à l'autre ;
• une seconde feuille comprenant des premier, second, troisième et quatrième bords disposés de sorte que les premier et troisième bords sont pratiquement parallèles l'un à l'autre, et les second et quatrième bords sont pratiquement parallèles l'un à l'autre, le premier bord de la première feuille étant associé opérationnellement au premier bord de la seconde feuille par piqûre, le second bord de la première feuille étant associé opérationnellement au second bord de la seconde feuille par piqûre, le troisième bord de la première feuille étant associé opérationnellement au troisième bord de la seconde feuille par piqûre ;
• une ouverture formée par les première et seconde feuilles définie en partie par le quatrième bord de la première feuille et le quatrième bord de la seconde feuille.

11. Produit d'assaisonnement emballé selon la revendication 10, dans lequel SOIT
• l'intérieur du sac de cuisson est revêtu avec un revêtement non collant comprenant un matériau résistant à la chaleur qui est choisi parmi du silicone, de l'aluminium, du polyéthylène téréphtalate, du polytétrafluoroéthylène ; SOIT
• l'extérieur du sac de cuisson est revêtu avec un revêtement non collant comprenant un matériau résistant à la chaleur qui est choisi parmi du silicone, de l'aluminium, du polyéthylène téréphtalate, du polytétrafluoroéthylène ; SOIT a les deux.

12. Produit d'assaisonnement emballé selon l'une quelconque des revendications 10-11, dans lequel le sac de cuisson est constitué de papier sulfurisé.

13. Produit d'assaisonnement emballé selon l'une quelconque des revendications 10-12, dans lequel les parois du sac de cuisson présentent une épaisseur de 10-100 µm.

14. Produit d'assaisonnement emballé selon l'une quelconque des revendications 10-13, dans lequel le sac de cuisson est plié et le sac de cuisson plié présente une longueur de 3-15 cm et une largeur de 1-10 cm.

15. Produit d'assaisonnement emballé selon l'une quelconque des revendications 10-14, dans lequel l'emballage comprend des instructions pour préparer un produit alimentaire cuit prêt à être consommé par introduction d'un produit alimentaire avec l'assaisonnement dans le sac de cuisson et par cuisson du produit alimentaire ainsi enfermé en chauffant le sac de cuisson contenant le produit alimentaire et l'assaisonnement dans une casserole.
